# EUROPÄISCHE PATENTSCHRIFT

(11) **EP 2 054 701 B1**
(45) Veröffentlichungstag und Bekanntmachung des Hinweises auf die Patenterteilung: **10.10.2018**
(21) Anmeldenummer: 07801661.5
(22) Anmeldetag: 15.08.2007
(51) Int. Cl.: G01D 13/04, B60K 37/02, B60Q 3/14

(54) **DREIDIMENSIONALES ZIFFERNBLATT**
THREE DIMENSIONAL DIAL
CADRAN TRIDIMENSIONNEL

(30) Priorität: 18.08.2006 DE 102006038784
(43) Veröffentlichungstag der Anmeldung: 06.05.2009
(73) Patentinhaber: Johnson Controls Automotive Electronics GmbH, 75196 Remchingen (DE)
(72) Erfinder: BEHRENDS, Heinz, 76332 Bad Herrenalb (DE); SANNWALD, Jürgen, 76227 Karlsruhe (DE)
(74) Vertreter: Wolff, Felix
(86) Internationale Anmeldenummer: PCT/EP2007/007197
(87) Internationale Veröffentlichungsnummer: WO 2008/019834

(56) Entgegenhaltungen:
- EP-A- 0 841 542
- WO-A-2005/085768
- US-A1- 2003 116 079
- US-A1- 2004 221 791

## Beschreibung

Die vorliegende Erfindung betrifft eine Anzeigevorrichtung eines Kraftfahrzeuges mit einem Zifferblatt, das eine Trägerschicht aufweist.

Derartige gattungsgemäße Anzeigevorrichtungen sind beispielsweise aus den deutschen Gebrauchsmustern DE 85 01 393 sowie DE 93 01 584 bekannt. Die dort gelehrten Anzeigevorrichtungen sind jedoch oftmals nicht bei allen Lichtverhältnissen gut lesbar bzw. vergleichsweise aufwendig herzustellen.

Es war deshalb die Aufgabe der vorliegenden Erfindung eine Anzeigevorrichtung eines Kraftfahrzeuges zur Verfügung zu stellen, die die Nachteile des Standes der Technik nicht aufweist.

Gelöst wird die Aufgabe mit einer Anzeigevorrichtung eines Kraftfahrzeuges mit einem Zifferblatt, das eine Trägerschicht aufweist, wobei die Trägerschicht dreidimensional geformt, vorzugsweise tiefgezogen, ist.

Es war für den Fachmann überaus erstaunlich und nicht zu erwarten, dass die erfindungsgemäße Vorrichtung sehr einfach herzustellen ist und sowohl bei Tag als auch bei Nacht sehr gut ablesbar ist. Die erfindungsgemäße Anzeigevorrichtung weist ein vergleichsweise geringes Gewicht auf.

Eine Anzeigevorrichtung im Sinne der vorliegenden Erfindung ist jede Instrumentenanzeige, die dem Fahrzeuginsassen Informationen über den momentanen Zustand des Fahrzeuges vermittelt. Beispielhaft seien nur die Geschwindigkeits-, Drehzahl-, Öldruck-, Benzinstands- sowie Temperaturanzeige genannt.

Erfindungsgemäß weist diese Anzeigevorrichtung eine Trägerschicht auf, die beispielsweise der Anzeigevorrichtung ihre benötigte Stabilität verleiht. Erfindungsgemäß ist diese Trägerschicht dreidimensional plastisch geformt vorzugsweise tiefegezogen.

Durch dieses Formen der Trägerschicht, kann diese bei gleicher oder verbesserter mechanische Stabilität dünner ausgeführt werden, was sowohl eine Gewicht als auch eine Materialeinsparung darstellt. Des Weiteren weist die erfindungsgemäße Anzeigevorrichtung gewölbte Bereiche im Zifferblatt auf, die dadurch optisch besonders hervorgehoben oder besonders gut ablesbar sind, weil sie beispielsweise nicht spiegeln.

Die Trägerschicht kann aus jedem beliebigen dem Fachmann geläufigen Material hergestellt werden. Vorzugsweise handelt es sich jedoch um Kunststoff, ganz besonders bevorzugt um einen zumindest partiell transparenten Kunststoff. Beispielhaft sei als Werkstoff der Trägerschicht Polycarbonat aufgeführt.

In einer besonders bevorzugten Ausführungsform der vorliegenden Erfindung ist die Trägerschicht eine Folie, vorzugsweise mit einer Dicke von 0,3 bis 0,5 Millimeter. Diese bevorzugte Ausführungsform der vorliegenden Erfindung hat den Vorteil, dass die Trägerschicht besonders einfach zu verformen ist. Beim Verformen durch Tiefzeihen wird die Folie zumindest in den Bereichen, die verformt werden sollen, erwärmt und sodann plastisch verformt. Es ist jedoch auch denkbar, die Folie insgesamt kalt tief zuziehen.

Erfindungsgemäß weist die Trägerschicht eine Chromschicht auf. Die erfindungsgemäße Ausführungsform hat den Vorteil, dass Licht von einer Lichtquelle, die auf der dem Fahrzeuginsassen abgewandten Seite der erfindungsgemäßen Anzeigevorrichtung angeordnet wird, nur teilweise durch das Zifferblatt hindurch strahlt. Dadurch wird das Licht gedämpft und kann beispielsweise den Fahrzeuginsassen nicht blenden, obwohl das Zifferblatt beleuchtet ist.

Vorzugsweise wird die Chromschicht auf die Trägerschicht insbesondere die Folie aufgedampft oder aufgesputtert.

Die weiteren Ausführungen gelten für beide erfindungsgemäßen Gegenstände gleichermaßen.

Erfindungsgemäß weist die Trägerschicht eine Farbschicht auf. Die Farbe dieser Farbschicht ist frei wählbar. Vorzugsweise ist die Farbschicht allein oder in Kombination mit der Chromschicht transluzent, so dass das Licht einer Lichtquelle, die hinter der Trägerschicht angeordnet ist, zumindest teilweise die Trägerschicht durchstrahlt.

Die Anzeigevorrichtung weist Anzeigemittel wie beispielsweise Zahlen, Buchstaben, Skalenstriche, Symbole oder dergleichen auf. Ganz besonders bevorzugt ist die Farbschicht in dem Bereich des Anzeigemittels nicht angeordnet, wodurch sich die Anzeigemittel besonders gut lesbar werden. Diese Anzeigemittel können beispielsweise auf der erfindungsgemäßen Trägerschicht aufgebracht werden, in dem die Trägerschicht vor dem Auftragen der Farbschicht mit einer Schablone so abgedeckt wird, dass die Farbschicht im Bereich der Anzeigemittel nicht aufgetragen wird.

Im Bereich der Anzeigemittel ist eine weitere Farbe angeordnet, so dass diese besonders gut sichtbar sind. Dieser Effekt wird dadurch hergestellt, dass auf die Trägerschicht zunächst eine Farbschicht, die der Farbe der Anzeigemittel entspricht, aufgebracht wird. Diese Farbschicht der Anzeigemittel wird dann mit der Farbe der Farbschicht der Trägerschicht überdeckt, wobei die Anzeigemittel wieder abdeckt werden.

Der Fachmann versteht, dass einige Anzeigemittel eine spezielle Farbe haben können und andere nicht. Die letzteren sind dann chromfarben.

Vorzugsweise wird an der Rückseite, d. h. der dem Fahrzeuginsassen abgewandten Seite ein Leuchtmittel vorzugsweise hinter der Trägerschicht angeordnet. Ganz besonders bevorzugt, handelt es sich bei dem Leuchtmittel um ein Flächenleuchtmittel. In einer noch weiteren bevorzugten Ausführungsform, weist das Leuchtmittel einen Lichtleiter insbesondere ein Flächenlichtleiter auf. Diese Ausführungsform der vorliegenden Erfindung hat den Vorteil, dass die Lichtquelle beispielsweise LEDs in einem größeren Abstand zur Trägerschicht angeordnet werden kann. Flächenlichtleiter im Sinne der Erfindung sind beispielsweise Tellerlichtleiter, bei denen Licht über einen runden Querschnitt gleichmäßig verteilt wird und die im wesentlichen die Form eines Tellers aufweisen.

Bei dem Leuchtmittel kann es sich auch um eine Hinterfluranzeige, d.h. eine Anzeige, die sich hinter der Trägerschicht befindet, handeln.

Im folgenden werden die Erfindungen anhand der Figuren 1 bis 3 erläutert. Diese Erläuterungen sind lediglich beispielhaft und schränken den allgemeinen Erfindungsgedanken nicht ein.
- **Figur 1**: zeigt die Trägerschicht der erfindungsgemäßen Anzeigvorrichtung.
- **Figuren 2a und 2b**: zeigen mögliche Schichtaufbauten der Trägerschicht gemäß Figur 1.
- **Figur 3**: zeigt die in das Armaturenbrett integrierte Anzeigevorrichtung.

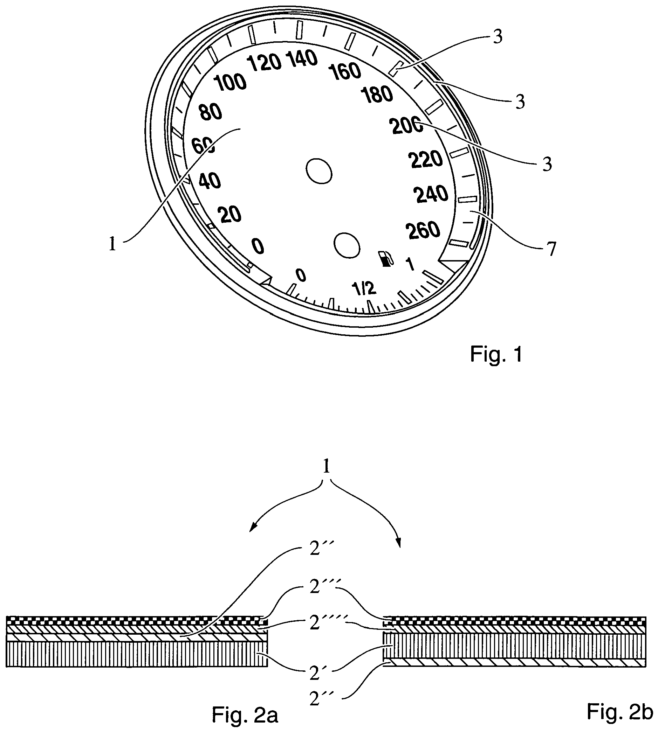

**Figur 1** zeigt die erfindungsgemäße Anzeigevorrichtung 1 in dem vorliegenden Fall, das Zifferblatt zur Geschwindigkeitsanzeige eines Kraftfahrzeuges, das aus einer dreidimensional geformten Chromfolie 2' hergestellt ist. Eine Chromfolie ist eine Folie, auf die eine Chromschicht aufgetragen ist. Des weiteren weist das Zifferblatt 1 eine Tankanzeige sowie eine Tempomatanzeige auf. Diese Chromfolie weist am Umfang einen hochgebördelten Rand auf, der über eine schräg gestellte hufeisenförmige Skalenanzeige 7 verfügt. Am oberen Rand der Schräge ist ein umlaufender Kreisring 3 angeordnet, der der Tempomat-Anzeige dient. Mit der Tempomatanzeige kann angezeigt werden, auf welche Geschwindigkeit der Tempomat eingestellt ist. Die Skalenstriche, die Tempomatanzeige bzw. die Ziffern 3 sowie die Tankanzeige werden dadurch hergestellt, dass auf das Zifferblatt eine transluzente Farbe 2"', in dem vorliegenden Schwarz, auf der dem Insassen zugewandten Seite auftragen beispielsweise aufgesprüht wird, wobei die Geschwindigkeitsanzeige bzw. die Skalenstriche, die Tankanzeige sowie die Tempomatanzeige beim Farbauftrag abgedeckt werden und somit chromfarben bleiben. Es ist jedoch auch denkbar, dass die Ziffern beispielsweise weiß sind. Diese Ausführungsform der erfindungsgemäßen Vorrichtung wird dadurch hergestellt, dass vor der transluzenten schwarzen Farbe 2'" zunächst eine weitere transluzente Farbe 2"", die Farbe der Ziffern und/oder der Skalenstriche, auf die Chromfolie aufgetragen wird. Diese Farbe wird dann unter Abdeckung der Zahlen und/oder der Skalenstriche mit der transluzenten Farbe 2'" übersprüht. Der Fachmann erkennt, dass es auch möglich ist nur einige Anzeigemittel mit einer speziellen Farbe 2"" zu versehen und die anderen chromfarben zu lassen.

Eine Lichtquelle, die hinter dem Zifferblatt 1 angeordnet ist, lässt diese in einem warmen Farbton gleichmäßig erstrahlen, wobei die Anzeigemittel 3, sofern von der Lichtquelle beleuchtet, stärker hervortreten.

In den **Figuren 2a und 2b** sind mögliche Schichtaufbauten der erfindungsgemäßen Anzeigevorrichtung gezeigt. In **Figur 2a** ist die Trägerschicht 2' zu sehen, auf der die Chromschicht aufgedampft wurde. Diese Chromschicht 2" wird durch die Farbschicht 2"" der Anzeigemittel 3 beispielsweise der Zahlen oder der Skalenstriche abgedeckt und abschließend mit der Farbschicht 2'" übersprüht, wobei die Ziffern bzw. die Skalenstriche abgedeckt werden. Die gesamte Schicht ist sowohl im Ziffernbereich als auch in dem restlichen Bereich transluzent, so dass eine Lichtquelle, die auf dem fahrgastabgewandten Seite angeordnet ist, die Anzeigevorrichtung zumindest teilweise durchstrahlt. Diese erscheint dadurch vollflächig gleichmäßig matt beleuchtet, wobei die Anzeigemittel stärker leuchten.

Die Anzeigevorrichtung gemäß **Figur 2b** entspricht im wesentlichen die Anzeigevorrichtung gemäß **Figur 2a****,** wobei in dem vorliegenden Fall, die Chromschicht 2" jedoch auf der anderen Oberfläche der Trägerschicht 2' angeordnet ist. Ansonsten wird auf die Ausführungen zu Figur 2a verwiesen.

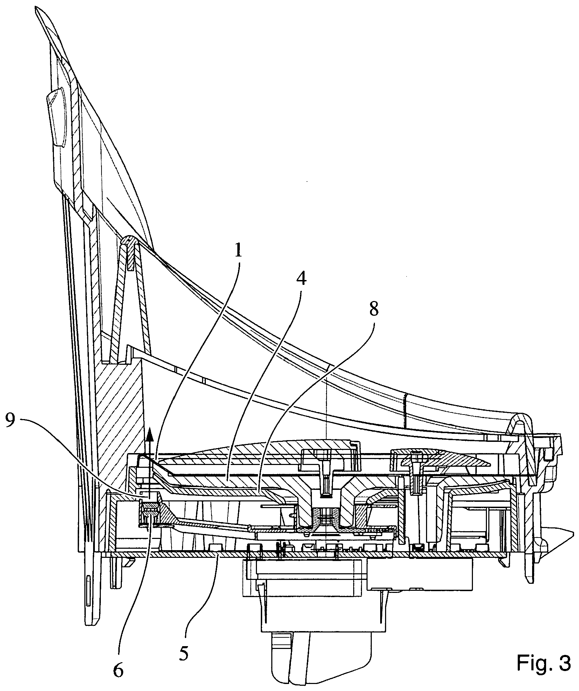

**Figur 3** zeigt die erfindungsgemäße Anzeigevorrichtung 1, die in dem vorliegenden Fall in ein Armaturenbrett eingebaut ist. Die Anzeigvorrichtung weist ein LED-Haus mit einer LED-Leiterplatte auf, durch die Licht erzeugbar ist. Die LED kann weißes und/oder farbiges Licht abstrahlen. Dieses Licht wird mittels optischer Umlenkelemente wie beispielsweise Spiegelflächen, Linsen zu einem Flächenlichtleiter 4, einem Tellerlichtleiter, unterhalb des Zifferblatts 1 geleitet. Die optischen Elemente sind vorzugsweise Teil des Lichtleiters. Das LED-Haus reflektiert Licht, das nicht in Richtung des Zifferblatts strahlt, zurück in den Flächenlichtleiter. Durch den Flächenlichtleiter 4 wird das gesamte Zifferblatt 1 beleuchtet, wobei ein Teil des Lichtes die Trägerschicht und die anderen Schichten durchstrahlt, so dass bei einer schwarzen Deckschicht 2'" dieses farblich erscheint. Des weiteren werden durch den Lichtleiter 4 die Ziffern bzw. die Skalenstriche 3 beleuchtet, die, da sie mit der Farbschicht 2"' nicht bedeckt sind, stärker strahlen als das übrige Zifferblatt. Der Unterfluranzeiger 6 weist eine eigene Lichtquelle, beispielsweise LEDs, und gegebenenfalls optische Mittel auf. Die Lichtquelle strahlt Licht, wie durch den Pfeil 9 dargestellt, in den oberen Bereich der Tempomatanzeige 3, so dass dort ein erleuchteter Bereich erzeugt wird, der dem Fahrzeuginsassen anzeigt, bei welcher Geschwindigkeit der Tempomat gesetzt ist. Dieser erleuchtete Bereich kann die Form eines Punktes, Kreises, Dreiecks, Vierecks oder dergleichen aufweisen.

### Bezugszeichenliste:

- 1: Anzeigevorrichtung, Zifferblatt
- 2': Trägerschicht
- 2": Chromschicht
- 2'": Deckschicht
- 2"": Farbschicht der Ziffern und/oder Skalenstriche sowie der Tempomatanzeige

- 3: Skalenstrich, Ziffer, Tempomatanzeige, Tankanzeige
- 4: Lichtleiter, Flächenlichtleiter, Tellerlichtleiter
- 5: LED-Leiterplatte
- 6: Unterfluranzeige
- 7: Skalenstrichanzeige
- 8: LED-Haus
- 9: Lichtstrahl

## Patentansprüche

1. Anzeigevorrichtung eines Kraftfahrzeuges mit einem Zifferblatt (1), das eine Trägerschicht (2') aufweist, die dreidimensional geformt, vorzugsweise tiefgezogen, ist, wobei die Anzeigevorrichtung Anzeigemittel (3) aufweist, wobei die Anzeigemittel (3) Zahlen und Skalenstriche umfassen, wobei die Trägerschicht (2') mit einer Chromschicht (2") versehen ist,
**dadurch gekennzeichnet, dass**
die Chromschicht (2") durch eine Farbschicht (2"") der Anzeigemittel (3) abgedeckt ist, wobei die Farbschicht (2"") der Anzeigemittel (3) mit einer weiteren Farbschicht (2"') übersprüht worden ist, wobei die Anzeigemittel (3) abgedeckt wurden, wobei die gesamte Schicht transluzent ist, so dass die Anzeigevorrichtung von einer Lichtquelle zumindest teilweise durchstrahlbar ist.

2. Anzeigevorrichtung nach Anspruch 1, **dadurch gekennzeichnet, dass** die Trägerschicht (2') eine Folie ist.

3. Anzeigevorrichtung nach einem der voranstehenden Ansprüche, **dadurch gekennzeichnet, dass** die Anzeigemittel (3) durch Aussparungen in der weiteren Farbschicht (2''') erzeugt sind.

4. Anzeigevorrichtung nach Anspruch 3, **dadurch gekennzeichnet, dass** die Anzeigevorrichtung im Bereich der Anzeigemittel (3) eine weitere Farbe aufweist.

5. Anzeigevorrichtung nach einem der voranstehenden Ansprüche, **dadurch gekennzeichnet, dass** an der Rückseite ein Leuchtmittel (4, 5, 6) angeordnet ist.

6. Anzeigevorrichtung nach Anspruch 5, **dadurch gekennzeichnet, dass** das Leuchtmittel (4, 5, 6) mindestens ein Flächenleuchtmittel ist.

7. Anzeigevorrichtung nach Anspruch 5 oder 6, **dadurch gekennzeichnet, dass** das Leuchtmittel (4, 5, 6) einen Lichtleiter, vorzugsweise einen Flächenlichtleiter, umfasst.

## Claims

1. Motor vehicle display device, comprising a dial (1), which has a backing layer (2'), which is three-dimensionally formed and is preferably deep-drawn, wherein the display device has display means (3), wherein the display means (3) comprise numerals and scale marks, wherein the backing layer (2') is provided with a chromium layer (2"), **characterized in that** the chromium layer (2") is masked by a colour layer (2'''') of the display means (3), wherein the colour layer (2'''') of the display means (3) has been sprayed over with a further colour layer (2'''), wherein the display means (3) have been masked, wherein the entire layer is translucent, so that a light source shines at least partially through the display device.

2. Display device according to Claim 1, **characterized in that** the backing layer (2') is a film.

3. Display device according to one of the preceding claims, **characterized in that** the display means (3) are produced by gaps in the further colour layer (2''').

4. Display device according to Claim 3, **characterized in that** the display device has a further colour in the area of the display means (3).

5. Display device according to one of the preceding claims, **characterized in that** a luminous means (4, 5, 6) is arranged on the rear side.

6. Display device according to Claim 5, **characterized in that** the luminous means (4, 5, 6) is at least one lamellar luminous means.

7. Display device according to Claim 5 or 6, **characterized in that** the luminous means (4, 5, 6) comprises a light guide, preferably a lamellar light guide.

## Revendications

1. Dispositif d'affichage d'un véhicule automobile comprenant un cadran (1), lequel possède une couche porteuse (2') qui est formée tridimensionnelle, de préférence emboutie, le dispositif d'affichage possédant des moyens d'affichage (3), les moyens d'affichage (3) comportant des chiffres et des traits de graduation, la couche porteuse (2') étant pourvue d'une couche de chrome (2"),
**caractérisé en ce que**
la couche de chrome (2'') est recouverte par une couche de couleur (2"") des moyens d'affichage (3), la couche de couleur (2"") des moyens d'affichage (3) ayant été recouvert par pulvérisation d'une couche de couleur supplémentaire (2""), les moyens d'affichage (3) ayant été recouverts, la couche totale étant translucide de sorte que le dispositif d'affichage peut être traversé au moins partiellement par le rayonnement d'une source de lumière.

2. Dispositif d'affichage selon la revendication 1, **caractérisé en ce que** la couche porteuse (2') est un film.

3. Dispositif d'affichage selon l'une des revendications précédentes, **caractérisé en ce que** les moyens d'affichage (3) sont générés par des évidements dans la couche de couleur supplémentaire (2"').

4. Dispositif d'affichage selon la revendication 3, **caractérisé en ce que** le dispositif d'affichage possède une couleur supplémentaire dans la zone des moyens d'affichage (3).

5. Dispositif d'affichage selon l'une des revendications précédentes, **caractérisé en ce qu'**un moyen lumineux (4, 5, 6) est disposé sur le côté arrière.

6. Dispositif d'affichage selon la revendication 5, **caractérisé en ce que** le moyen lumineux (4, 5, 6) est au moins un moyen lumineux plan.

7. Dispositif d'affichage selon la revendication 5 ou 6, **caractérisé en ce que** le moyen lumineux (4, 5, 6) comprend une fibre optique, de préférence une fibre optique plane.
